# EUROPÄISCHE PATENTSCHRIFT

(11) **EP 3 406 458 B1**
(45) Veröffentlichungstag und Bekanntmachung des Hinweises auf die Patenterteilung: **18.08.2021**
(21) Anmeldenummer: 18000473.1
(22) Anmeldetag: 18.05.2018
(51) Int. Cl.: B42D 25/324, B42D 25/328, B42D 25/373, B42D 25/23, B42D 25/24, B42D 25/29, B42D 25/425, G02B 5/09

(54) **SICHERHEITSELEMENT MIT REFLEKTIVEM FLÄCHENBEREICH**
SECURITY ELEMENT WITH REFLECTIVE SURFACE AREA
ÉLÉMENT DE SÉCURITÉ À ZONE DE SURFACE RÉFLÉCHISSANTE

(30) Priorität: 26.05.2017 DE 102017005050
(43) Veröffentlichungstag der Anmeldung: 28.11.2018
(73) Patentinhaber: Giesecke+Devrient Currency Technology GmbH, 81677 München (DE)
(72) Erfinder: Dorff, Giselher, 83607 Holzkirchen (DE)

(56) Entgegenhaltungen:
- WO-A1-2012/055505
- WO-A1-2017/011476
- DE-A1-102009 056 934
- DE-A1-102014 014 082

## Beschreibung

Die Erfindung betrifft ein Sicherheitselement zur Absicherung von Wertgegenständen mit einem reflektiven Flächenbereich, dessen Ausdehnung eine x-y-Ebene definiert, wobei der reflektive Flächenbereich eine Vielzahl von reflektiven Facetten enthält, die einfallendes Licht in eine durch ihre Orientierung bestimmte Reflexionsrichtung reflektieren. Die Erfindung betrifft auch ein Verfahren zur Herstellung eines solchen Sicherheitselements sowie einen entsprechend ausgestatteten Datenträger.

Datenträger, wie etwa Wert- oder Ausweisdokumente, oder andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Eine besondere Rolle bei der Echtheitsabsicherung spielen Sicherheitselemente mit betrachtungswinkelabhängigem oder dreidimensionalem Erscheinungsbild, da diese selbst mit modernsten Kopiergeräten nicht reproduziert werden können.

Es ist bekannt, zur Erzeugung von dreidimensional erscheinenden Darstellungen folienbasierte Sicherheitselemente mit einer Mikrospiegelanordnung einzusetzen, die das Reflexionsverhalten gekrümmter Oberflächen simuliert. So ist in der Druckschrift DE 10 2009 056 934 A1 ein Sicherheitselement mit einem Flächenbereich beschrieben, bei dem die Facetten so orientiert sind, dass für einen Betrachter der Flächenbereich als gegenüber seiner tatsächlichen Raumform vor- und/oder zurückspringende Fläche wahrnehmbar ist. Während solche Mikrospiegeleffekte ein attraktives visuelles Erscheinungsbild zeigen, weisen sie als solche keine besonders hohe Fälschungssicherheit auf.

Aus der Druckschrift WO 2017/011476 A1 ist ferner ein optisches Produkt bekannt, das ein erstes 3D-Bild von mindestens einem Teil eines ersten 3D-Objekts und ein zweites 3D-Bild von mindestens einem Teil eines zweiten 3D-Objekts reproduziert. Das optische Produkt umfasst dazu eine Oberfläche, die derart konfiguriert ist, dass sie bei Beleuchtung blickwinkelabhängig entweder das erste 3D-Bild oder das zweite 3D-Bild aufgrund von Reflexion oder Transmission des Lichts reproduziert.

Die Druckschrift WO 2012/ 055505 A1 beschreibt ein Sicherheitselement, das in einem Flächenbereich ein optisch variables Flächenmuster enthält, das aus einer Mehrzahl von aperiodisch angeordneten strahlenoptisch wirkenden Facetten gebildet ist.

Die Druckschrift DE 10 2014 014 082 A2 befasst sich mit Sicherheitselementen mit einem reflektiven Flächenbereich, bei denen reflektive Facetten so orientiert sind, dass der reflektive Flächenbereich für einen Betrachter als gegenüber seiner tatsächlichen Raumform vor- und/oder zurückspringende Fläche wahrnehmbar ist, und zumindest ein Teil der Facetten mit einem diffraktiven Gittermuster versehen ist.

Ausgehend davon liegt der Erfindung die Aufgabe zugrunde, ein Sicherheitselement der eingangs genannten Art mit erhöhter Fälschungssicherheit anzugeben.

Diese Aufgabe wird durch die Merkmale der unabhängigen Ansprüche gelöst. Weiterbildungen der Erfindung sind Gegenstand der abhängigen Ansprüche.

Gemäß der Erfindung ist bei einem gattungsgemäßen Sicherheitselement wie in Anspruch 1 definiert vorgesehen, dass
- der reflektive Flächenbereich zumindest einen periodischen Teilbereich mit jeweils einer Vielzahl von in einem periodischen Raster angeordneten reflektiven Facetten enthält, und zumindest einen aperiodischen Teilbereich mit jeweils einer Vielzahl von aperiodisch angeordneten reflektiven Facetten enthält, wobei die periodischen und aperiodischen Teilbereiche zusammen die Gesamtfläche des reflektiven Flächenbereichs bilden, und dass
- die periodischen und aperiodischen Teilbereiche miteinander verschachtelt angeordnet sind, so dass der Umriss der periodischen und/oder der aperiodischen Teilbereiche innerhalb der Gesamtfläche des reflektiven Flächenbereichs ein Muster, Zeichen, oder eine Codierung darstellt.

Eine miteinander verschachtelte Anordnung bedeutet dabei insbesondere, dass die Teilbereiche nicht nur nebeneinanderliegende rechteckige Gebiete bilden, sondern dass sie komplexere, ineinandergreifende Formen haben und durch ihre Anordnung die genannten Muster, Zeichen oder Codierungen bilden. Der reflektive Flächenbereich kann nur einen einzigen periodischen Teilbereich und/oder nur einen einzigen aperiodischen Teilbereich enthalten, typischerweise sind aber für zumindest eine Teilbereichssorte mehrere Teilbereiche vorgesehen. Bilden beispielsweise die aperiodischen Teilbereiche eine Mikroschrift innerhalb des reflektiven Flächenbereichs, so stellt zumindest jeder Buchstabe und jede Ziffer der Mikroschrift einen aperiodischen Teilbereich dar, während die restliche Fläche des reflektiven Flächenbereichs aus periodischen Teilbereichen gebildet ist.

Der Umriss der periodischen und/oder der aperiodischen Teilbereiche kann ein oder mehrere Muster, Zeichen, oder Codierungen innerhalb der Gesamtfläche des reflektiven Flächenbereichs darstellen. Der Einfachheit halber wird nachfolgend meist die Pluralform verwendet, was allerdings nicht ausschließen soll, dass auch nur ein einziges Muster, ein einziges Zeichen oder eine einzige Codierung vorliegen kann.

Die Gesamtfläche des reflektiven Flächenbereichs ist mit Vorteil zusammenhängend, insbesondere einfach zusammenhängend ausgebildet.

Da die periodischen und aperiodischen Teilbereiche zusammen die Gesamtfläche des reflektiven Flächenbereichs bilden, nehmen sowohl die in einem periodischen Raster angeordneten reflektiven Facetten als auch die aperiodisch angeordneten reflektiven Facetten an der Reflexion des einfallendes Lichts, beispielsweise zur Erzeugung eines dreidimensionalen Reliefmotivs, teil. Allerdings führt die unterschiedliche Periodizität der reflektiven Facetten in den periodischen bzw. aperiodischen Teilbereichen in der Regel zu kleinen Unterschieden im Reflexionsverhalten der Teilbereiche, die zwar nicht ohne Weiteres wahrzunehmen sind, aber prinzipiell eine Unterscheidung der Teilbereiche ermöglicht. Beispielsweise können die periodisch angeordneten Facetten eine etwas brillantere und metallischer wirkende Lichtreflexion aufweisen als die aperiodisch angeordneten Facetten. Die konkrete Aufteilung des reflektiven Flächenbereichs in periodische und aperiodische Teilbereiche, etwa in Form einer Mikroschrift, stellt daher ein subtiles Echtheitsmerkmal innerhalb des Reliefmotivs des Sicherheitselements dar.

Die Facetten können mit sehr kleinen Abmessungen von nur einigen Mikrometern ausgebildet sein, so dass auch das aus den periodischen und aperiodischen Teilbereichen gebildete Echtheitsmerkmal mit sehr kleiner Fläche unterhalb der Auflösungsgrenze des bloßen Auges als verstecktes Merkmal ausgebildet sein kann. Falls gewünscht, können die Facetten allerdings auch in einem großem Flächenbereich mit unterschiedlichen Periodizitätseigenschaften ausgebildet sein und aufgrund ihrer unterschiedlichen Lichtreflexion als visuell erkennbares gestalterisches Merkmal eingesetzt werden.

In einer vorteilhaften Ausgestaltung ist vorgesehen, dass der Umriss der aperiodischen Teilbereiche innerhalb der Gesamtfläche des reflektiven Flächenbereichs Zeichen, insbesondere eine Buchstaben- und/oder Ziffernfolge darstellt.

Die genannten Muster, Zeichen, oder Codierungen können insbesondere ein verstecktes Sicherheitsmerkmal bilden, das mit bloßem Auge ohne Hilfsmittel, wie insbesondere eine Lupe oder ein Mikroskop, nicht erkennbar ist.

Die genannten Muster, Zeichen, oder Codierungen weisen mit Vorteil Abmessungen unterhalb der Auflösungsgrenze des bloßen Auges, vorzugsweise unterhalb von 100 µm, insbesondere unterhalb von 60 µm auf. Besonders bewährt haben sich Gestaltungen, bei denen der Umriss der periodischen und/oder der aperiodischen Teilbereiche innerhalb der Gesamtfläche des reflektiven Flächenbereichs Zeichen, insbesondere alphanumerische Zeichen darstellt, die eine Strichstärke unterhalb von 15 µm, insbesondere unterhalb von 10 µm aufweisen.

In einer vorteilhaften Ausgestaltung unterscheiden sich die periodischen Teilbereiche und die aperiodischen Teilbereiche in ihrer Reflektivität, insbesondere unterscheiden sie sich geringfügig in Helligkeit, Brillanz und/oder Farbton. Eine geringfügige Abweichung ist insbesondere eine Abweichung von weniger als 3%, vorteilhaft von weniger als 2% und besonders vorteilhaft von weniger als 1% in einem zugehörigen Messwert für Helligkeit, Brillanz bzw. Farbton.

Die reflektiven Facetten weisen mit Vorteil in der x-y-Ebene in zumindest einer, vorzugsweise in allen Richtungen Abmessungen unterhalb von 30 µm, bevorzugt unterhalb von 20 µm, besonders bevorzugt unterhalb von 10 µm auf.

Die in dem periodischen Raster angeordneten reflektiven Facetten weisen vorzugsweise in der x-y-Ebene in allen Richtungen Abmessungen von mehr als 3 µm auf. Die Abmessungen sind insbesondere so gewählt, dass Beugungseffekte für einfallendes Licht (z. B. aus dem Wellenlängenbereich von 380 nm bis 750 nm) praktisch keine Rolle mehr spielen.

Da keine bzw. keine praktisch relevanten Beugungseffekte auftreten, können die reflektiven Facetten als achromatische Facetten bezeichnet werden, die eine gerichtet achromatische Reflexion bewirken.

Die reflektiven Facetten sind vorteilhaft im Wesentlichen als ebene, gegen die x-y-Ebene geneigte Flächenelemente ausgebildet. Die Formulierung "im Wesentlichen" trägt dabei der Tatsache Rechnung, dass sich in der Praxis herstellungsbedingt keine perfekt ebenen Flächenelemente erzeugen lassen. Alternativ können die Facetten auch als gekrümmte, insbesondere konkave, konvexe oder gewellte Flächenelemente ausgebildet sein, und dabei auch Fresnelstrukturen bilden.

Bezogen auf die x-y-Ebene weisen die reflektiven Facetten mit Vorteil eine Ganghöhe von weniger als 20 µm, bevorzugt von 10 µm oder weniger, besonders bevorzugt von 5 µm oder weniger auf. Vorzugsweise weist die Raumform des reflektiven Flächenbereichs selbst somit keine mit bloßem Auge wahrnehmbaren Höhenunterschiede auf.

Die reflektiven Facetten weisen mit Vorteil eine metallische oder halbleitende Beschichtung, eine hochbrechende Beschichtung oder eine farbkippende Beschichtung auf.

In einer vorteilhaften Erfindungsvariante ist vorgesehen, dass der reflektive Flächenbereich bei Betrachtung in reflektiertem Licht ein dreidimensionales Reliefmotiv erzeugt und die reflektiven Facetten so orientiert sind, dass der reflektive Flächenbereich für einen Betrachter als das dreidimensionale Reliefmotiv mit einer gegenüber seiner tatsächlichen Raumform vor- und/oder zurückspringenden Oberfläche wahrnehmbar ist.

Bei dem dreidimensionalen Reliefmotiv kann es sich insbesondere um ein Portrait oder realitätsnahe Darstellungen von Gegenständen, Tieren oder Pflanzen handeln.

In einer anderen, ebenfalls vorteilhaften Erfindungsvariante ist vorgesehen, dass der reflektive Flächenbereich in eine Vielzahl von reflektiven Pixeln aufgeteilt ist, wobei die Fläche jedes Pixels um zumindest eine Größenordnung kleiner ist als die Fläche des reflektiven Flächenbereiches, wobei jedes Pixel zumindest eine der genannten reflektiven Facetten aufweist, und wobei die Orientierungen der Facetten unterschiedlicher Pixel über den reflektiven Flächenbereich eine im Wesentlichen zufällige Variation aufweisen.

Die Pixel stellen dabei kleine Teilbereiche des reflektiven Flächenbereichs dar, die eine beliebige Umrissform haben können. Eine zufällige Variation kann beispielsweise auch mit sogenannten Pseudozufallszahlen erhalten werden. Pseudozufallszahlen sind Zahlenfolgen, die zwar zufällig erscheinen, aber durch einen deterministischen Algorithmus berechnet werden und daher im strengen Sinn keine echten Zufallszahlen sind. Dennoch werden Pseudozufallszahlen verbreitet eingesetzt, da die statistischen Eigenschaften einer Pseudozufallszahlenverteilung, wie Gleichwahrscheinlichkeit der einzelnen Zahlen oder die statistische Unabhängigkeit aufeinanderfolgender Zahlen, für praktische Zwecke in der Regel ausreichend "unregelmäßig" sind und Pseudozufallszahlen mit Computern im Gegensatz zu echten Zufallszahlen einfach zu erzeugen sind.

Mit Vorteil weisen die Orientierungen der reflektiven Facetten unterschiedlicher Pixel eine im Wesentlichen zufällige Variation um bereichsweise vorgegebene unterschiedliche mittlere Orientierungen auf.

In einer vorteilhaften Weiterbildung weisen mehrere der Pixel jeweils mehrere reflektive Facetten gleicher Orientierung auf, die ein periodisches oder aperiodisches Sägezahngitter bilden. Es können auch alle Pixel jeweils mehrere, bevorzugt die gleiche Anzahl von reflektiven Facetten gleicher Orientierung aufweisen.

Mit dieser Erfindungsvariante können praktisch alle mit magnetisch orientierten Pigmenten erzielbaren optischen Effekte nachgestellt werden, insbesondere die in der Druckschrift US 7,517,578 B2 genannten Effekte "Rolling Bar" oder "Double Rolling Bar". Zweckmäßig ist dabei die Orientierung der Facetten derart gewählt, dass der reflektive Flächenbereich einen kontinuierlichen Verlauf der mittleren Reflexionsrichtungen der Pixel aufweist.

In einer weiteren vorteilhaften Erfindungsvariante ist vorgesehen, dass der reflektive Flächenbereich in einem visuell erkennbaren ersten Unterbereich bei Betrachtung in reflektiertem Licht ein dreidimensionales Reliefmotiv erzeugt und die reflektiven Facetten in dem ersten Unterbereich so orientiert sind, dass der erste Unterbereich für einen Betrachter als das dreidimensionale Reliefmotiv mit einer gegenüber seiner tatsächlichen Raumform vor- und/oder zurückspringenden Oberfläche wahrnehmbar ist, und dass der reflektive Flächenbereich in einem visuell erkennbaren zweiten Unterbereich in eine Vielzahl von reflektiven Pixeln aufgeteilt ist, wobei die Fläche jedes Pixels um zumindest eine Größenordnung kleiner ist als die Fläche des zweiten Unterbereichs, wobei jedes Pixel zumindest eine der genannten reflektiven Facetten aufweist, und wobei die Orientierungen der Facetten unterschiedlicher Pixel über den zweiten Unterbereich eine im Wesentlichen zufällige Variation aufweisen.

In allen Erfindungsvarianten kann der reflektive Flächenbereich auch mit anderen Prägestrukturen, beispielsweise anderen Mikrospiegeldarstellungen, Hologrammgittern oder Nanostrukturen nebeneinander angeordnet vorliegen. Die Anordnung kann dabei sowohl streifenweise neben- oder übereinander als auch in Pixelform erfolgen.

Die Erfindung enthält auch einen Datenträger mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite, oder um einen anderen Wertgegenstand, insbesondere einen Markenartikel oder eine Münze, handeln.

Die Erfindung enthält weiter ein in Anspruch 16 definiertes Verfahren zur Herstellung eines Sicherheitselements der oben beschriebenen Art, bei dem
- ein Träger bereitgestellt und mit einem reflektiven Flächenbereich versehen wird, dessen Ausdehnung eine x-y-Ebene definiert, wobei
- der reflektive Flächenbereich mit einer Vielzahl von reflektiven Facetten ausgebildet wird, die einfallendes Licht in eine durch ihre Orientierung bestimmte Reflexionsrichtung reflektieren,
- der reflektive Flächenbereich mit zumindest einem periodischen Teilbereich mit jeweils einer Vielzahl von in einem periodischen Raster angeordneten reflektiven Facetten ausgebildet wird und mit zumindest einem aperiodischen Teilbereich mit jeweils einer Vielzahl von aperiodisch angeordneten reflektiven Facetten ausgebildet wird, wobei die periodischen und aperiodischen Teilbereiche zusammen die Gesamtfläche des reflektiven Flächenbereichs bilden, und
- die periodischen und aperiodischen Teilbereiche so miteinander verschachtelt angeordnet werden, dass der Umriss der periodischen und/oder der aperiodischen Teilbereiche innerhalb der Gesamtfläche des reflektiven Flächenbereichs ein Muster, Zeichen, oder eine Codierung darstellt.

Die beschriebenen Sicherheitselemente, insbesondere mit verschachtelten Nanostrukturen/Mikrospiegelstrukturen, können vorteilhaft mit lithographischen Verfahren, beispielsweise einer e-Beam Anlage oder einer Laserschreibanlage hergestellt werden. Alternativ kann eine solche Struktur auch in einem zweistufigen lithographischen Prozess erzeugt werden, wobei in einem ersten Schritt die Nanostrukturierung vorgenommen wird, beispielsweise mittels Elektronenstrahllithographie, einem optischen Zwei-Photonenabsorptionsprozess oder einem Laserstrahlinterferenzverfahren. Aperiodische Mottenaugenstrukturen können außerdem durch Plasmaätzen oder durch Strukturieren mit ultrakurzen Laserpulsen erzeugt werden.

In einem Folgeschritt wird ein solches Original oder eine Kopie davon mit Photolack eingeebnet. Hierzu eignen sich vor allem Spincoating, Spray-Coating oder Dip-Coating Verfahren. Dann wird die Mikrospiegelanordnung in einem weiteren lithographischen Schritt in den Photolack geschrieben und die gewünschten Bereiche der Nanostrukturen freibelichtet. Dieser Prozess kann beispielsweise mit Hilfe eines Laserschreibers im Direktbelichtungsverfahren erfolgen. Das so entstandene Original kann anschließend galvanisch oder unter Verwendung von Photopolymeren (beispielsweise Ormocere) umkopiert werden. Die Oberflächenstruktur eines auf diese Weise hergestellten Stempels kann nun durch ein Step-and-Repeat Verfahren auf einer größeren Fläche nebeneinander vervielfältigt werden. Durch galvanische Abformung dieses auf der Fläche replizierten Originals kann davon ein Prägezylinder hergestellt werden. Die Struktur kann dann in einem kontinuierlichen Rolle-zu-Rolle Prozess auf Folie geprägt werden. Dabei kommen insbesondere Heißpräge- oder Nanoimprint-Verfahren in Frage. Schließlich wird die geprägte Folie metallisch bedampft, wobei als übliche Bedampfungsverfahren insbesondere Elektronenstrahl-Bedampfen, thermisches Verdampfen oder Sputtern in Frage kommen. Als metallisches Material können Metalle, wie beispielsweise Aluminium, Silber, Kupfer, Palladium, Gold, Chrom, Nickel und/oder Wolfram sowie deren Legierungen eingesetzt werden. Nach dem Bedampfen wird die Struktur einkaschiert bzw. mit einer Deckfolie geschützt.

Ihre reflektierenden Eigenschaften können die Facetten statt durch eine einfache Metallbeschichtung auch durch eine Mehrfachschicht erhalten. Hierbei kommen insbesondere sogenannte Color-Shift-Beschichtungen in Frage, welche aus einer halbtransparenten Metallschicht (Absorber), einer dielektrischen Abstandsschicht und einer darunter befindlichen metallischen Reflexionsschicht bestehen. Als Dielektrika eignen sich insbesondere SiO₂, MgF₂, Ta₂O₅, ZnS und Polymere.

Sollen demetallisierte Bereiche in dem Sicherheitselement erzeugt werden, so wird beispielsweise vor dem Bedampfen auf den gewünschten Bereichen Waschfarbe aufgedruckt und diese dann nach dem Bedampfen entfernt. Alternativ können diese Bereiche auch mit Laserdemetallisierung erzeugt werden. Wiederum alternativ können zu diesem Zweck Ätzverfahren eingesetzt werden, nachdem zuvor eine Ätzmaske auf die vollflächige Metallschicht aufgebracht, beispielsweise aufgedruckt wurde.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen Sicherheitselement in Form eines aufgeklebten Transferelements,
- Fig. 2: zur Illustration das Zustandekommen der dreidimensionalen Darstellung und den grundlegenden Aufbau erfindungsgemäßer Sicherheitselemente,
- Fig. 3: einen Detailausschnitt des reflektiven Flächenbereichs des Sicherheitselements der Fig. 1 im Bereich des versteckten Sicherheitsmerkmals, und
- Fig. 4: einen Detailausschnitt wie Fig. 3 eines weiteren Ausführungsbeispiels der Erfindung.

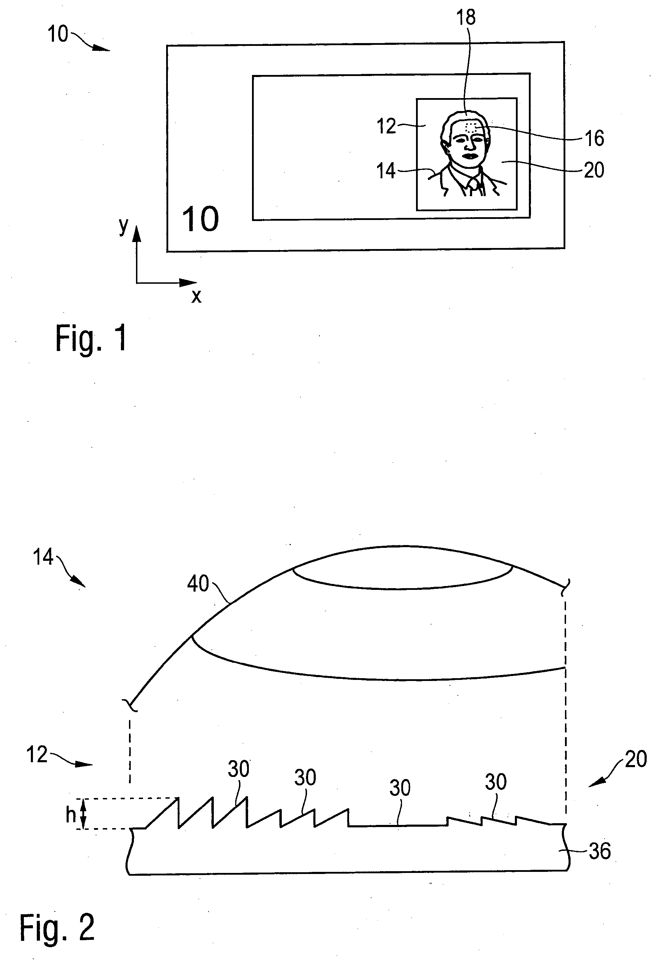

Die Erfindung wird nun am Beispiel von Sicherheitselementen für Banknoten erläutert. Figur 1 zeigt dazu eine schematische Darstellung einer Banknote 10 mit einem erfindungsgemäßen Sicherheitselement 12 in Form eines aufgeklebten Transferelements. Die Erfindung ist allerdings nicht auf Transferelemente und Banknoten beschränkt ist, sondern kann bei allen Arten von Sicherheitselementen eingesetzt werden, beispielsweise bei Etiketten auf Waren und Verpackungen oder bei der Absicherung von Dokumenten, Münzen, Ausweisen, Pässen, Kreditkarten, Gesundheitskarten und dergleichen.

Das Sicherheitselement 12 enthält einen reflektiven Flächenbereich 20, dessen Ausdehnung eine x-y-Ebene definiert, die mit der Oberfläche der Banknote 10 zusammenfällt. Das Sicherheitselement 12 ist selbst sehr flach mit maximalen Höhendifferenzen von nur etwa 10 µm ausgebildet, dennoch zeigt es dem Betrachter in reflektiertem Licht ein sich aus der x-y-Ebene herauswölbendes, dreidimensionales Reliefmotiv 14 in Form eines 3D-Portraits.

Als Besonderheit und zusätzliche Echtheitsabsicherung ist in das Sicherheitselement 12 ein verstecktes Sicherheitsmerkmal 16 in Form einer mikroskopisch kleinen Mikroschrift integriert. Das versteckte Sicherheitsmerkmal 16 nimmt an der Darstellung des dreidimensionalen Reliefmotivs 14 teil und ist daher unauffällig und mit bloßem Auge nicht zu erkennen. Sein Nachweis erfordert vielmehr je nach konkreter Ausbildung beispielsweise ein Lichtmikroskop oder sogar ein Rasterelektronenmikroskop.

Das Zustandekommen der dreidimensionalen Darstellung und die Integration der Mikroschrift 16 in das Sicherheitselement 12 werden nun mit Bezug auf die Figuren 2 bis 4 näher erläutert. Zunächst illustriert Fig. 2 das grundsätzliche Zustandekommen des dreidimensionalen Erscheinungsbilds des Sicherheitselements 12, wobei schematisch ein Ausschnitt des Sicherheitselements 12 im Querschnitt und über dem Sicherheitselement 12 eine perspektivische Ansicht 40 des vom Betrachter bei der Betrachtung des Sicherheitselements 12 wahrgenommenen gewölbten Reliefmotivs 14 gezeigt ist.

Der reflektive Flächenbereich 20 des Sicherheitselements 12 enthält eine Vielzahl reflektiver Facetten 30, die jeweils so orientiert sind, dass der reflektive Flächenbereich 20 für einen Betrachter als dreidimensionales Reliefmotiv 14 mit einer gegenüber seiner tatsächlichen Raumform vor- und/ oder zurückspringenden Oberfläche 40 wahrnehmbar ist. In dem Folienträger 36 des Sicherheitselements 12 ist demnach nicht die vom Betrachter wahrgenommene gewölbte Fläche 40 selbst ausgebildet, sondern eine Vielzahl reflektiver Facetten 30, die durch ihre Orientierung das Reflexionsverhalten der gewölbten Fläche 14, 40 imitieren, aber eine wesentlich geringere Ganghöhe (typischerweise nur wenige Mikrometer) als die imitierte gewölbte Fläche aufweisen. Da die reflektiven Facetten 30 jeweils kleine Mikrospiegel darstellen, wird die Facettenanordnung im Rahmen dieser Beschreibung oft auch als Mikrospiegelanordnung und die Facetten als Mikrospiegel bezeichnet.

Im Ausführungsbeispiel sind die Facetten 30 mit rechteckigem Umriss und einer Kantenlänge unterhalb von 10 µm ausgebildet. Jede Facette 30 bildet dabei ein ebenes Flächenelement, das gegen die x-y-Ebene um einen bestimmten Winkel geneigt ist. Der Neigungswinkel einer Facette 30 entspricht gerade dem lokalen Steigungswinkel der imitierten gewölbten Fläche 14, 40. Die Ganghöhe h der reflektiven Facetten 30, also ihr Höhenunterschied bezogen auf die x-y-Ebene, liegt allerdings nur zwischen 0 µm und 10 µm, vorzugsweise zwischen 0 µm und 5 µm, so dass der gesamte reflektive Flächenbereich 20 mit bloßem Auge nicht wahrnehmbare Höhenunterschiede von höchstens 10 µm aufweist.

Da die geometrische Reflexionsbedingung "Einfallswinkel gleich Ausfallswinkel" für die Reflexion von gerichtetem Licht nur von der lokalen Orientierung der reflektierenden Fläche 40 bzw. 20 abhängt und die Facetten 30 wegen ihrer geringen Größe selbst nicht sichtbar sind und die Steigung der imitierten Fläche 40 sehr genau nachbilden, zeigt der reflektive Flächenbereich 20 im Wesentlichen dieselben Reflexionseigenschaften wie die zu imitierende dreidimensionale Fläche 14, 40. Der reflektive Flächenbereich 20 erzeugt daher beim Betrachter trotz seiner geringen Höhendifferenzen den ausgeprägt dreidimensionalen Eindruck der imitierten Fläche 14, 40.

Um darüber hinaus das versteckte Sicherheitsmerkmal 16 in den reflektiven Flächenbereich 20 der Portraitdarstellung 14 integrieren zu können, enthält der reflektive Flächenbereich 20 mehrere Teilbereiche, in denen die Facetten 30 mit unterschiedlichen Periodizitätseigenschaften angeordnet sind.

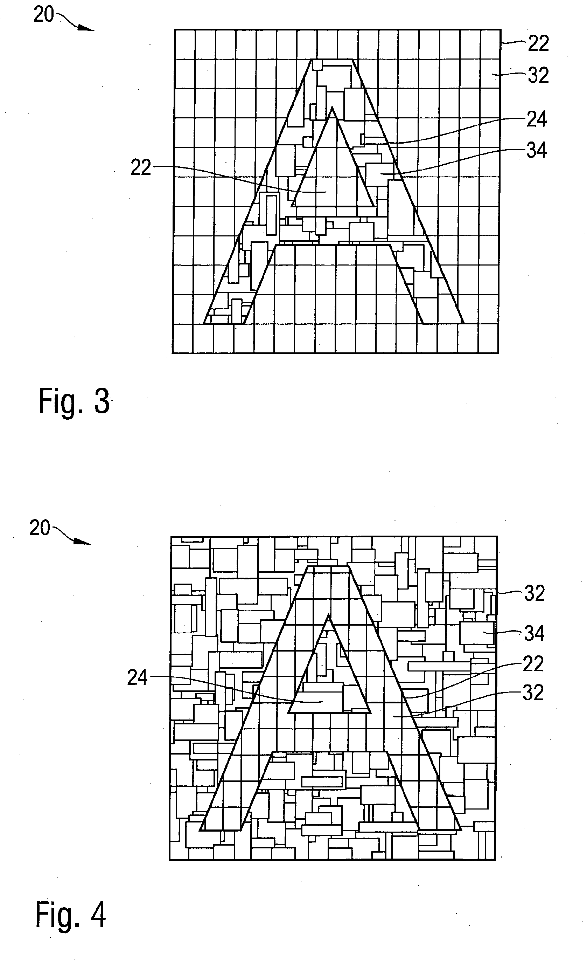

Zur näheren Illustration zeigt Fig. 3 einen Detailausschnitt des reflektiven Flächenbereichs 20 im Bereich des versteckten Sicherheitsmerkmals 16, wobei der gezeigte Ausschnitt einen Buchstaben "A" der versteckten Mikroschrift enthält. In ersten Teilbereichen 22, die im Ausführungsbeispiel fast die gesamte Fläche des reflektiven Flächenbereichs 20 einnehmen, sind die reflektiven Facetten 32 dabei in einem periodischen Raster angeordnet, so dass die Teilbereiche 22 als periodische Teilbereiche bezeichnet werden. In den periodischen Teilbereichen 22 sind die Facetten 32 rechteckig mit in die Ebene projizierten Kantenlängen von 4 µm x 6 µm ausgebildet und sind so gegen die x-y-Ebene geneigt, dass sie aufgrund ihrer lokalen Orientierung im Raum das gewünschte Reflexionsverhalten des 3D-Portraits 14 erzeugen.

Ein zweiter Teilbereich 24, der im Detailausschnitt der Fig. 3 die Fläche des Mikrobuchstabens "A" einnimmt, ist mit aperiodisch angeordneten reflektiven Facetten 34 gefüllt. Die Facetten 34 sind mit unregelmäßigen Formen (hier unregelmäßige Rechtecke), mit unterschiedlicher Größe und unterschiedlichem Kantenverhältnis ausgebildet und weisen in jeder Richtung eine maximale Kantenlänge von 10 µm auf. Wegen der unregelmäßigen Formen und der unregelmäßigen Anordnung der Facetten 34 wird der Teilbereich 24 als aperiodischer Teilbereich bezeichnet. Die Neigung der Facetten 34 gegen die x-y-Ebene ist, genauso wie die Neigung der Facetten 32 des periodischen Teilbereichs 22, so gewählt, dass sie aufgrund ihrer lokalen Orientierung im Raum das gewünschte Reflexionsverhalten des Portraits 14 erzeugen. Die Facetten 34 des zweiten Teilbereichs 24 nehmen daher ebenso wie die Facetten 32 der ersten Teilbereiche 22 an der Erzeugung der imitierten gewölbten Fläche 40 des Portraits 14 teil. Anders ausgedrückt, wird die gewölbte Fläche 40 des Portraits 14 durch eine Mikrospiegelanordnung erzeugt, die sowohl periodisch angeordnete Mikrospiegel, nämlich die Facetten 32 der ersten Teilbereiche 22, als auch aperiodisch angeordnete Mikrospiegel, nämlich die Facetten 34 des zweiten Teilbereichs 24, enthält.

Neben dem in Fig. 3 gezeigten aperiodischen Teilbereich 24 sind innerhalb des Portraits 14 weitere aperiodische Teilbereiche in Form von Mikrobuchstaben vorgesehen, die zusammen den gewünschten Mikroschriftzug, beispielsweise die Seriennummer "AB 123456" bilden. Die aperiodischen Teilbereiche weisen dabei alle Abmessungen unterhalb der Auflösungsgrenze des menschlichen Auges auf. Beispielsweise sind die Zeichen der Mikroschrift mit einer Strichstärke von 6 µm und einer Buchstabenhöhe von etwa 50 µm ausgebildet.

Wie in Fig. 3 illustriert, sind die periodischen und aperiodischen Teilbereiche 22, 24 miteinander verschachtelt angeordnet, so dass der Umriss der aperiodischen Teilbereiche 24 innerhalb der Gesamtfläche des reflektiven Flächenbereichs 20 die gewünschte Mikroschrift darstellt. Aufgrund der geringen Abmessungen der Teilbereiche 24 und den noch geringeren Abmessungen der Facetten 34, sowie der Tatsache, dass sowohl die Facetten 32 als auch die Facetten 34 zur Erzeugung der gewölbten Fläche 14 beitragen, ist das Vorliegen der Mikroschrift und damit das Vorhandensein des versteckten Merkmals 16 mit bloßem Auge nicht erkennbar.

Allerdings ist die Lichtreflexion der periodischen Teilbereiche 22 aufgrund der periodischen Anordnung der Facetten 32 etwas brillanter und metallischer als die Lichtreflexion der aperiodischen Teilbereiche 24 mit ihren aperiodisch angeordneten Facetten 34. Ist als Reflexionsschicht der Facetten beispielsweise eine Aluminiumschicht vorgesehen, so erscheinen die periodischen Teilbereiche 22 auch etwas weniger grau als die aperiodischen Teilbereiche 24. Unter starker Vergrößerung, beispielsweise einem Lichtmikroskop, können diese geringen und nur auf der kleinen Fläche der Mikroschrift vorliegenden Reflexionsunterschiede allerdings visuell und/oder maschinell nachgewiesen werden. In einem starken Lichtmikroskop oder einem Rasterelektronenmikroskop können die unterschiedlichen Periodizitätseigenschaften in Form und Anordnung der Facetten 32 bzw. 34 auch direkt beobachtet werden (siehe Fig. 3) und die Mikroschrift auch auf diese Weise ausgelesen werden.

Die versteckte Mikroschrift 16 bildet somit ein perfekt in das Design des Portraits 14 integriertes Sicherheitsmerkmal, das für den Hersteller mit geringem Aufwand erzeugt werden kann, das für einen potentiellen Fälscher jedoch sehr schwer nachzustellen ist. Während sich Mikrospiegeleffekte, wie etwa der hier beispielhaft beschriebene Wölbeffekt, an sich in gewissem Umfang nachstellen lassen, stellt die Nachstellung der periodischen und aperiodischen Teilbereiche 22, 24 in Form einer kleinen Mikroschrift technologisch eine wesentlich größere Hürde dar, so dass das Sicherheitselement 12 eine hohe Fälschungssicherheit aufweist.

Es versteht sich, dass der Umriss der aperiodischen Teilbereiche 24 nicht nur eine Mikroschrift darstellen kann, sondern in Form beliebiger Zeichen, Muster oder Codierungen ausgebildet sein kann. Die aperiodischen Teilbereiche 24 können sogar ganze versteckte Bilder darstellen, die mit bloßem Auge nicht sichtbar sind und erst bei Betrachtung mit einem Mikroskop in Erscheinung treten.

Mit Bezug auf das Ausführungsbeispiel der Fig. 4 kann die Rolle der periodischen und aperiodischen Flächenbereiche 22, 24 auch vertauscht sein, so dass beispielsweise der aperiodische Teilbereich 24 fast die gesamte Fläche des reflektiven Flächenbereichs 20 einnimmt und die Mikroschrift oder andere Muster, Zeichen oder Codierungen durch die Umrisse periodischer Teilbereiche 22 gebildet sind.

Der Detailausschnitt der Fig. 4 zeigt einen periodischen Teilbereich 22 in Form des Buchstabens "A" verschachtelt mit aperiodischen Teilbereichen 24. Der Umriss der periodischen Teilbereiche 22 stellt innerhalb der Gesamtfläche des reflektiven Flächenbereichs 20 die gewünschte Mikroschrift dar, wobei Fig. 4 wiederum das Prinzip nur anhand eines Buchstabens illustriert. Aufgrund der geringen Abmessungen der Teilbereiche 22, der noch geringeren Abmessungen der Facetten 32, sowie der Tatsache, dass sowohl die Facetten 32 als auch die Facetten 34 zur Erzeugung der gewölbten Fläche 14 beitragen, ist das Vorliegen der Mikroschrift und damit das Vorhandensein eines versteckten Merkmals 16 mit bloßem Auge nicht wahrnehmbar.

Da die periodisch angeordneten Facetten 32 allerdings zu einer etwas brillanteren und metallischeren Lichtreflexion der periodischen Teilbereiche 22 führen als die aperiodisch angeordneten Facetten 34 des aperiodischen Teilbereichs 24, können diese geringen, kleinflächigen Reflexionsunterschiede unter starker Vergrößerung nachgewiesen und die Mikroschrift dadurch visuell und/oder maschinell nachgewiesen werden. Ist als Reflexionsschicht eine Aluminiumschicht vorgesehen, so erscheinen die periodische Teilbereiche 22 auch hier etwas weniger grau als die aperiodischen Teilbereiche 24.

Der benötigte Aufwand, um das versteckte Sicherheitsmerkmal 16 erkennen zu können, kann durch die Größe der Teilbereiche 22, 24 nach Wunsch eingestellt werden. Werden die Buchstaben der Mikroschrift und damit die Bereiche unterschiedlich periodischer Anordnung der Facetten größer ausgebildet, kann das versteckte Sicherheitsmerkmal 16 bereits mit einer Lupe erkennbar sein. Andererseits können die Teilbereiche 22, 24 auch so klein ausgebildet sein, dass selbst ein Lichtmikroskop zum sicheren Nachweis nicht ausreicht, sondern die starke Vergrößerung eines Rasterelektronenmikrokops erforderlich ist.

Auch hier können anstelle einer einfachen Mikroschrift natürlich auch komplexere Informationen eingebracht sein. Wegen der geringen Größe der Facetten können ganze Bilder in den Teilbereichen mit abweichenden Periodizitätseigenschaften kodiert und unter starker Vergrößerung sichtbar gemacht werden.

Schließlich ist es grundsätzlich auch möglich, zumindest einen Teilbereich mit abweichenden Periodizitätseigenschaften so großflächig auszubilden, dass er bei genauerer Betrachtung bereits mit bloßem Auge sichtbar ist. Beispielsweise kann in Fig. 1 der Bereich 18 der Haare des Portraits 14 einen aperiodischen Teilbereich 24 aus aperiodisch angeordneten reflektiven Facetten bilden, während das restliche Portrait 14 (gegebenenfalls mit Ausnahme einer Mikroschrift 16) einen periodischen Teilbereich 22 aus periodisch angeordneten reflektiven Facetten bildet.

Bei sorgfältiger Betrachtung kann ein Nutzer dann die etwas geringere Brillanz bzw. die etwas grauere Farbe der Haare 18, 24 gegenüber dem restlichen Portrait 22 wahrnehmen. Mit den unterschiedlichen Periodizitätseigenschaften der Teilbereiche 22, 24 können daher auch gestalterisch Helligkeitsunterschiede und leichte Farbunterschiede in einer ansonsten rein metallischen Portraitdarstellung erzeugt werden.

### Bezugszeichenliste

- 10: Banknote
- 12: Sicherheitselement
- 14: dreidimensionales Reliefmotiv, Portrait
- 16: verstecktes Sicherheitsmerkmal
- 18: Haare im Portrait
- 20: reflektiver Flächenbereich
- 22: periodischer Teilbereich
- 24: aperiodischer Teilbereich
- 30: reflektive Facetten
- 32: periodisch angeordnete reflektive Facetten
- 34: aperiodisch angeordnete reflektive Facetten
- 36: Folienträger
- 40: wahrgenommene Oberfläche des Reliefmotivs

## Patentansprüche

1. Sicherheitselement (12) zur Absicherung von Wertgegenständen, mit einem reflektiven Flächenbereich (20), dessen Ausdehnung eine x-y-Ebene definiert, wobei
- der reflektive Flächenbereich (20) eine Vielzahl von reflektiven Facetten (30; 32; 34) enthält, die einfallendes Licht in eine durch ihre Orientierung bestimmte Reflexionsrichtung reflektieren,
wobei
- der reflektive Flächenbereich (20) zumindest einen periodischen Teilbereich (22) mit jeweils einer Vielzahl von in einem periodischen Raster angeordneten reflektiven Facetten (32) enthält, und zumindest einen aperiodischen Teilbereich (24) mit jeweils einer Vielzahl von aperiodisch angeordneten reflektiven Facetten (34) enthält, wobei die periodischen und aperiodischen Teilbereiche (22, 24) zusammen die Gesamtfläche des reflektiven Flächenbereichs (20) bilden, und
- die periodischen und aperiodischen Teilbereiche (22, 24) miteinander verschachtelt angeordnet sind, so dass der Umriss der periodischen und/oder der aperiodischen Teilbereiche (22, 24) innerhalb der Gesamtfläche des reflektiven Flächenbereichs (20) ein Muster, Zeichen, oder eine Codierung darstellt.

2. Sicherheitselement nach Anspruch 1, **dadurch gekennzeichnet, dass** der Umriss der aperiodischen Teilbereiche innerhalb der Gesamtfläche des reflektiven Flächenbereichs Zeichen, insbesondere eine Buchstaben- und/oder Ziffernfolge darstellt.

3. Sicherheitselement nach Anspruch 1 oder 2, **dadurch gekennzeichnet, dass** die genannten Muster, Zeichen, oder Codierungen ein verstecktes Sicherheitsmerkmal bilden, das mit bloßem Auge ohne Hilfsmittel nicht erkennbar ist, wobei die genannten Muster, Zeichen, oder Codierungen Abmessungen unterhalb von 100 µm und unterhalb der Auflösungsgrenze des bloßen Auges aufweisen.

4. Sicherheitselement nach wenigstens einem der Ansprüche 1 bis 3, **dadurch gekennzeichnet, dass** die Zeichen eine Strichstärke unterhalb von 15 µm, insbesondere unterhalb von 10 µm aufweisen.

5. Sicherheitselement nach wenigstens einem der Ansprüche 1 bis 4, **dadurch gekennzeichnet, dass** sich die periodischen Teilbereiche und die aperiodischen Teilbereiche in ihrer Reflektivität unterscheiden, insbesondere geringfügig in Helligkeit, Brillanz und/oder Farbton unterscheiden.

6. Sicherheitselement nach wenigstens einem der Ansprüche 1 bis 5, **dadurch gekennzeichnet, dass** die reflektiven Facetten in der x-y-Ebene in zumindest einer Richtung, vorzugsweise in allen Richtungen Abmessungen unterhalb von 30 µm, bevorzugt unterhalb von 20 µm, besonders bevorzugt unterhalb von 10 µm aufweisen.

7. Sicherheitselement nach wenigstens einem der Ansprüche 1 bis 6, **dadurch gekennzeichnet, dass** die in dem periodischen Raster angeordneten reflektiven Facetten in der x-y-Ebene in allen Richtungen Abmessungen von mehr als 3 µm aufweisen.

8. Sicherheitselement nach wenigstens einem der Ansprüche 1 bis 7, **dadurch gekennzeichnet, dass** die reflektiven Facetten im Wesentlichen als ebene, gegen die x-y-Ebene geneigte Flächenelemente ausgebildet sind.

9. Sicherheitselement nach wenigstens einem der Ansprüche 1 bis 8, **dadurch gekennzeichnet, dass** die reflektiven Facetten bezogen auf die x-y-Ebene eine Ganghöhe von weniger als 20 µm, bevorzugt von 10 µm oder weniger, besonders bevorzugt von 5 µm oder weniger aufweisen.

10. Sicherheitselement nach wenigstens einem der Ansprüche 1 bis 9, **dadurch gekennzeichnet, dass** die reflektiven Facetten eine metallische oder halbleitende Beschichtung, eine hochbrechende Beschichtung oder eine farbkippende Beschichtung aufweisen.

11. Sicherheitselement nach wenigstens einem der Ansprüche 1 bis 10, **dadurch gekennzeichnet, dass** der reflektive Flächenbereich bei Betrachtung in reflektiertem Licht ein dreidimensionales Reliefmotiv erzeugt und die reflektiven Facetten so orientiert sind, dass der reflektive Flächenbereich für einen Betrachter als das dreidimensionale Reliefmotiv mit einer gegenüber seiner tatsächlichen Raumform vor- und/oder zurückspringende Oberflächen wahrnehmbar ist.

12. Sicherheitselement nach wenigstens einem der Ansprüche 1 bis 10, **dadurch gekennzeichnet, dass** der reflektive Flächenbereich in eine Vielzahl von reflektiven Pixeln aufgeteilt ist, wobei die Fläche jedes Pixels um zumindest eine Größenordnung kleiner ist als die Fläche des reflektiven Flächenbereiches, wobei jedes Pixel zumindest eine der reflektiven Facetten aufweist, und wobei die Orientierungen der Facetten unterschiedlicher Pixel über den reflektiven Flächenbereich eine im Wesentlichen zufällige Variation aufweisen, insbesondere, dass die Orientierungen der reflektiven Facetten unterschiedlicher Pixel eine im Wesentlichen zufällige Variation um bereichsweise vorgegebene unterschiedliche mittlere Orientierungen aufweisen.

13. Sicherheitselement nach Anspruch 12, bei dem mehrere der Pixel jeweils mehrere reflektive Facetten gleicher Orientierung aufweisen, die ein periodisches oder aperiodisches Sägezahngitter bilden.

14. Sicherheitselement nach wenigstens einem der Ansprüche 1 bis 13, **dadurch gekennzeichnet, dass** der reflektive Flächenbereich mit anderen Prägestrukturen nebeneinander angeordnet vorliegt.

15. Datenträger mit einem Sicherheitselement nach wenigstens einem der Ansprüche 1 bis 14.

16. Verfahren zum Herstellen eines Sicherheitselements (12) nach einem der Ansprüche 1 bis 14, bei dem
- ein Träger bereitgestellt und mit einem reflektiven Flächenbereich (20) versehen wird, dessen Ausdehnung eine x-y-Ebene definiert, wobei
- der reflektive Flächenbereich (20) mit einer Vielzahl von reflektiven Facetten (30; 32; 34) ausgebildet wird, die einfallendes Licht in eine durch ihre Orientierung bestimmte Reflexionsrichtung reflektieren,
- der reflektive Flächenbereich (20) mit zumindest einem periodischen Teilbereich (22) mit jeweils einer Vielzahl von in einem periodischen Raster angeordneten reflektiven Facetten (32) ausgebildet wird und mit zumindest einem aperiodischen Teilbereich (24) mit jeweils einer Vielzahl von aperiodisch angeordneten reflektiven Facetten (34) ausgebildet wird, wobei die periodischen und aperiodischen Teilbereiche (22, 24) zusammen die Gesamtfläche des reflektiven Flächenbereichs (20) bilden, und
- die periodischen und aperiodischen Teilbereiche (22, 24) so miteinander verschachtelt angeordnet werden, dass der Umriss der periodischen und/oder der aperiodischen Teilbereiche (22, 24) innerhalb der Gesamtfläche des reflektiven Flächenbereichs (20) ein Muster, Zeichen, oder eine Codierung darstellt.

## Claims

1. A security element (12) for securing valuable articles, having a reflective areal region (20) whose expanse defines an x-y plane,
- the reflective areal region (20) including a plurality of reflective facets (30; 32; 34) that reflect incident light in a reflection direction determined by their orientation,
**characterized in that**
- the reflective areal region (20) including at least one periodic sub-region (22) having, in each case, a plurality of reflective facets (32) arranged in a periodic grid, and including at least one aperiodic sub-region (24) having, in each case, a plurality of aperiodically arranged reflective facets (34), the periodic and aperiodic sub-regions (22, 24) together forming the total area of the reflective areal region (20), and
- the periodic and aperiodic sub-regions (22, 24) being arranged interleaved with each other such that the contour of the periodic and/or the aperiodic sub-regions (22, 24) within the total area of the reflective areal region (20) constitutes a pattern, characters or a code.

2. The security element according to claim 1, **characterized in that** the contour of the aperiodic sub-regions within the total area of the reflective areal region constitutes characters, especially a string of letters and/or numbers.

3. The security element according to claim 1 or 2, **characterized in that** said patterns, characters or codes form a hidden security feature that is not perceptible with the naked eye without auxiliary means, said patterns, characters or codes having dimensions below 100 µm and below the resolution limit of the naked eye.

4. The security element according to at least one of claims 1 to 3, **characterized in that** the characters have a line width below 15 µm, especially below 10 µm.

5. The security element according to at least one of claims 1 to 4, **characterized in that** the periodic sub-regions and the aperiodic sub-regions differ in their reflectivity, especially differ slightly in brightness, brilliance and/or tone.

6. The security element according to at least one of claims 1 to 5, **characterized in that** the reflective facets in the x-y plane have in at least one direction, preferably in all directions, dimensions below 30 µm, preferably below 20 µm, particularly preferably below 10 µm.

7. The security element according to at least one of claims 1 to 6, **characterized in that** the reflective facets arranged in the periodic grid have, in all directions in the x-y plane, dimensions of more than 3 µm.

8. The security element according to at least one of claims 1 to 7, **characterized in that** the reflective facets are formed substantially as planar areal elements that are inclined against the x-y plane.

9. The security element according to at least one of claims 1 to 8, **characterized in that** the reflective facets have, in relation to the x-y plane, a rise of less than 20 µm, preferably of 10 µm or less, particularly preferably of 5 µm or less.

10. The security element according to at least one of claims 1 to 9, **characterized in that** the reflective facets comprise a metallic or semiconductive coating, a high-index coating or a color-shifting coating.

11. The security element according to at least one of claims 1 to 10, **characterized in that,** when viewed in reflected light, the reflective areal region produces a three-dimensional relief motif and the reflective facets are oriented in such a way that the reflective areal region is perceptible for a viewer as the three-dimensional relief motif having a surface that jumps out and/or back with respect to its actual spatial form.

12. The security element according to at least one of claims 1 to 10, **characterized in that** the reflective areal region is divided into a plurality of reflective pixels, the area of each pixel being at least one order of magnitude smaller than the area of the reflective areal region, each pixel comprising at least one of the reflective facets, and the orientations of the facets of different pixels having a substantially random variation across the reflective areal region, especially **in that** the orientations of the reflective facets of different pixels have a substantially random variation about regionally specified different average orientations.

13. The security element according to claim 12, in which multiple of the pixels have, in each case, multiple reflective facets of the same orientation that form a periodic or aperiodic sawtooth grating.

14. The security element according to at least one of claims 1 to 13, **characterized in that** the reflective areal region is present having other embossing structures arranged next to each other.

15. A data carrier having a security element according to at least one of claims 1 to 14.

16. A method for manufacturing a security element (12) according to one of claims 1 to 14, in which
- a carrier is provided and furnished with a reflective areal region (20) whose expanse defines an x-y plane,
- the reflective areal region (20) being formed having a plurality of reflective facets (30; 32; 34) that reflect incident light in a reflection direction determined by their orientation,
- the reflective areal region (20) being formed having at least one periodic sub-region (22) having, in each case, a plurality of reflective facets (32) arranged in a periodic grid and being formed having at least one aperiodic sub-region (24) having, in each case, a plurality of aperiodically arranged reflective facets (34), the periodic and aperiodic sub-regions (22, 24) together forming the total area of the reflective areal region (20), and
- the periodic and aperiodic sub-regions (22, 24) being arranged interleaved with each other in such a way that the contour of the periodic and/or the aperiodic sub-regions (22, 24) within the total area of the reflective areal region (20) constitutes a pattern, characters, or a code.

## Revendications

1. Élément de sécurité (12) destiné à protéger des objets de valeur, avec une zone de surface réfléchissante (20) dont l'étendue définit un plan x-y, dans lequel
- la zone de surface réfléchissante (20) contient une multitude de facettes réfléchissantes (30 ; 32 ; 34), lesquelles réfléchissent la lumière incidente dans une direction de réflexion déterminée par leur orientation,
**caractérisé en ce que**
- la zone de surface réfléchissante (20) contient au moins une zone partielle périodique (22) comprenant respectivement une multitude de facettes réfléchissantes disposées dans un quadrillage périodique (32), et au moins une zone partielle apériodique (24) comprenant respectivement une multitude de facettes réfléchissantes disposées de façon apériodique (34), les zones partielles périodiques et apériodiques (22, 24) formant conjointement la surface totale de la zone de surface réfléchissante (20), et
- les zones partielles périodiques et apériodiques (22, 24) sont disposées de manière mutuellement imbriquée, de telle façon que le contour des zones partielles périodiques et/ou apériodiques (22, 24) représente un motif, un symbole ou un codage à l'intérieur de la surface totale de la zone de surface réfléchissante (20).

2. Élément de sécurité selon la revendication 1, **caractérisé en ce que le** contour des zones partielles apériodiques à l'intérieur de la surface totale de la zone de surface réfléchissante représente des symboles, en particulier une suite de lettres et/ou de chiffres.

3. Élément de sécurité selon la revendication 1 ou 2, **caractérisé en ce que** les motifs, symboles ou codages mentionnés forment une caractéristique de sécurité cachée, laquelle ne peut pas être détectée à l'œil nu sans accessoire, dans lequel les motifs, symboles ou codages mentionnés présentent des dimensions inférieures à 100 µm et inférieures au seuil de résolution de l'oeil nu.

4. Élément de sécurité selon l'une au moins des revendications 1 à 3, **caractérisé en ce que** les symboles présentent une épaisseur de trait inférieure à 15 µm, en particulier inférieure à 10 µm.

5. Élément de sécurité selon l'une au moins des revendications 1 à 4, **caractérisé en ce que** les zones partielles périodiques et les zones partielles apériodiques se distinguent par leur réflectivité, en particulier légèrement quant à la clarté, la brillance et/ou la couleur.

6. Élément de sécurité selon l'une au moins des revendications 1 à 5, **caractérisé en ce que** dans au moins une direction, de préférence dans toutes les directions dans le plan x-y, les facettes réfléchissantes présentent des dimensions inférieures à 30 µm, avantageusement inférieures à 20 µm, de façon particulièrement avantageuse inférieures à 10 µm.

7. Élément de sécurité selon l'une au moins des revendications 1 à 6, **caractérisé en ce que** les facettes réfléchissantes disposées dans le quadrillage périodique présentent des dimensions supérieures à 3 µm dans toutes les directions dans le plan x-y.

8. Élément de sécurité selon l'une au moins des revendications 1 à 7, **caractérisé en ce que** les facettes réfléchissantes sont conçues comme des éléments de surface plats, inclinés vers le plan x-y.

9. Élément de sécurité selon l'une au moins des revendications 1 à 8, **caractérisé en ce que** les facettes réfléchissantes présentent un pas inférieur à 20 µm, avantageusement inférieur à 10 µm, de façon particulièrement avantageuse inférieur à 5 µm.

10. Élément de sécurité selon l'une au moins des revendications 1 à 9, **caractérisé en ce que** les facettes réfléchissantes présentent un revêtement métallique ou semiconducteur, un revêtement hautement réfringent ou un revêtement à effet chatoyant.

11. Élément de sécurité selon l'une au moins des revendications 1 à 10, **caractérisé en ce que** la zone de surface réfléchissante produit un motif en relief tridimensionnel à la lumière réfléchie, et les facettes réfléchissantes sont orientées de telle façon que pour un observateur, la zone de surface réfléchissante peut être perçue comme le motif en relief tridimensionnel avec une surface saillante et/ou évidée par rapport à sa forme spatiale réelle.

12. Élément de sécurité selon l'une au moins des revendications 1 à 10, **caractérisé en ce que** la zone de surface réfléchissante est divisée en une multitude de pixels réfléchissants, dans lequel la surface de chaque pixel est inférieure d'au moins un ordre de grandeur à la surface de la zone de surface réfléchissante, dans lequel chaque pixel présente au moins l'une des facettes réfléchissantes, et dans lequel les orientations des facettes de différents pixels présentent une variation essentiellement aléatoire sur la zone de surface réfléchissante, en particulier **en ce que** les orientations des facettes réfléchissantes de différents pixels présentent une variation essentiellement aléatoire autour de différentes orientations moyennes partiellement définies.

13. Élément de sécurité selon la revendication 12, dans lequel plusieurs pixels présentent respectivement plusieurs facettes réfléchissantes avec une même orientation, lesquelles forment un quadrillage en dents de scie périodique ou apériodique.

14. Élément de sécurité selon l'une au moins des revendications 1 à 13, **caractérisé en ce que** la zone de surface réfléchissante est disposé à côté d'autres structures gravées.

15. Support de données comprenant un élément de sécurité selon l'une au moins des revendications 1 à 14.

16. Procédé de fabrication d'un élément de sécurité (12) selon l'une des revendications 1 à 14, dans lequel
- un support est mis à disposition et pourvu d'une zone de surface réfléchissante (20), dont l'étendue définit un plan x-y, dans lequel
- la zone de surface réfléchissante (20) est réalisé avec une multitude de facettes réfléchissantes (30 ; 32 ; 34), lesquelles réfléchissent la lumière incidente dans une direction de réflexion déterminée par leur orientation,
- la zone de surface réfléchissante (20) est réalisée avec au moins une zone partielle périodique (22) comprenant respectivement une multitude de facettes réfléchissantes disposées dans un quadrillage périodique (32), et avec au moins une zone partielle apériodique (24) comprenant respectivement une multitude de facettes réfléchissantes disposées de façon apériodique (34), les zones partielles périodiques et apériodiques (22, 24) formant conjointement la surface totale de la zone de surface réfléchissante (20), et
- les zones partielles périodiques et apériodiques (22, 24) sont disposées de manière mutuellement imbriquée, de telle façon que le contour des zones partielles périodiques et/ou apériodiques (22, 24) représente un motif, un symbole ou un codage à l'intérieur de la surface totale de la zone de surface réfléchissante (20).
